# EUROPÄISCHE PATENTSCHRIFT

(11) **EP 1 989 485 B1**
(45) Veröffentlichungstag und Bekanntmachung des Hinweises auf die Patenterteilung: **18.03.2015**
(21) Anmeldenummer: 07703839.6
(22) Anmeldetag: 12.01.2007
(51) Int. Cl.: G01L 23/10, F02P 19/02, F23Q 7/00, G01L 23/22

(54) **DRUCKMESSEINRICHTUNG**
PRESSURE MEASURING DEVICE
DISPOSITIF DE MESURE DE LA PRESSION

(30) Priorität: 21.02.2006 DE 102006008351
(43) Veröffentlichungstag der Anmeldung: 12.11.2008
(73) Patentinhaber: Robert Bosch GmbH, 70442 Stuttgart (DE); Kistler Holding AG, 8408 Winterthur (CH)
(72) Erfinder: KERN, Christoph, 71546 Aspach (DE); SCHOTT, Steffen, 71701 Schwieberdingen (DE); SALTIKOV, Pavlo, 71334 Waiblingen (DE); KLEINDL, Michael, 71701 Schwieberdingen (DE); ZACH, Reiko, 71686 Remseck (DE); WOLFER, Peter, CH-8451 Kleinandelfingen (CH); CAVALLONI, Claudio, CH-8105 Regensdorf (CH); HESS, Reinhold, CH-8405 Winterthur (CH); MÜLLER, Michael, CH-8544 Rickenbach-Attikon (CH); BERTOLA, Andrea, CH-8047 Zürich (CH)
(86) Internationale Anmeldenummer: PCT/EP2007/050299
(87) Internationale Veröffentlichungsnummer: WO 2007/096208

(56) Entgegenhaltungen:
- EP-A- 1 134 385
- EP-A- 1 598 651
- EP-A- 1 624 249
- EP-A1- 1 517 086
- EP-A2- 0 637 736
- WO-A1-92/01915
- DE-A1- 4 118 824
- DE-A1- 10 346 330
- DE-C- 656 168
- DE-C1- 3 811 311
- FR-A1- 2 869 391

## Beschreibung

### Stand der Technik

Die Erfindung betrifft eine Druckmesseinrichtung zur Anordnung in einer Kammer einer Brennkraftmaschine. Speziell betrifft die Erfindung eine Druckmessglühkerze zur Anordnung in einer Vor-, Wirbel- oder Brennkammer einer luftverdichtenden, selbstzündenden Brennkraftmaschine.

Eine Druckmesseinrichtung mit einem Gehäuse, einem Sensorkäfig und einem federelastischen Element ist aus EP 637 736 A2 bekannt. Dabei steht der Drucksensor einerseits mit einem Kraftübertragungselement in Wirkverbindung, um den Druckes aus einer Kammer auf den Drucksensor zu übertragen. Der Drucksensor stützt sich andererseits an einem Fixierelement ab. Das federelastische Element ist einerseits mit dem Kraftübertragungselement und andererseits mit dem Sensorkäfig verbunden, so dass das federelastische Element mit einer Vorspannung beaufschlagt ist. Die Befestigung des Sensorkäfigs innerhalb des Gehäuses erfolgt dadurch, indem ein mit dem Sensorkäfig verbundenes Fixierelement an einer äußeren Stirnfläche in des Gehäuse eingelötet ist.

Eine weitere Druckmesseinrichtung mit einem Drucksensor und mit einem federelastischen Element ist aus DE 38 11 311 C1 und WO 92/01915 A1 bekannt. Der Drucksensor ist dabei zwischen einem Stempel und einem Gegenlager angeordnet. Das federelastische Element ist zwischen Stempel und Gehäuse befestigt, wodurch der Drucksensor zwischen Stempel und Gegenlager vorgespannt wird.

Aus US 2003/0177839 A1 ist eine Druckmesseinrichtung bekannt, bei der ein Drucksensor innerhalb eines Sensorkäfigs angeordnet ist. Der Sensorkäfig ist mit einer Schweißnaht mit dem Gehäuse der Druckmesseinrichtung verbunden.

Zur Kompensation der thermischen Ausdehnung zwischen einem Zylinderkopf einer Brennkraftmaschine und einem Gehäuse einer Druckmesseinrichtung ist in EP 1134 385 A2 ein elastisch verformbarer Dichtring zwischen beiden Bauteilen angeordnet.

Um den Einfluss der hohen Temperaturen im Zylinderkopf auf den Drucksensor innerhalb einer Druckmesseinrichtung zu reduzieren, wird in DE 4118 824 A1 vorgeschlagen, zur Druckübertragung ein flüssiges Druckübertragungsmedium einzusetzen.

Aus EP 1 624 249 A2 ist eine Glühstiftkerze mit einem Drucksensor bekannt, wobei der Drucksensor außerhalb eines Gehäuses der Glühstiftkerze angeordnet ist. Innerhalb des Gehäuses ist ein Glühstift positioniert, der über einen Innenpol kontaktiert wird. Der Innenpol führt dabei aus dem Gehäuse heraus und ist außerhalb des Gehäuses mit einem Kraftübertragungselement verbunden, das auf den innerhalb eines Sensorkäfigs angeordneten Drucksensor einwirkt.

Aus DE 103 43 521 A1 ist eine Druckmessglühkerze für einen Dieselmotor bekannt. Die bekannte Druckmessglühkerze weist einen Kerzenkörper zum Einsetzen in einen Zylinder des Dieselmotors auf. Außerdem weist die bekannte Druckmessglühkerze einen im Kerzenkörper angeordneten Heizstab und einen Drucksensor auf, der zwischen dem Heizstab und dem Kerzenkörper angeordnet ist. Dabei wird der Drucksensor durch den vom Heizstab übertragenen Druck im Brennraum des Zylinders beeinflusst. Die bekannte Druckmessglühkerze weist außerdem eine Membran auf, die einerseits mit dem Kerzenkörper und andererseits mit dem Heizstab verbunden ist, um den Drucksensor gegenüber dem Brennraum abzudichten.

Die aus der DE 103 43 521 A1 bekannte Druckmessglühkerze hat den Nachteil, dass beim Einbau der Druckmessglühkerze in den Zylinder eine hohe mechanische Belastung der Membran durch die Montagekräfte auftritt.

Aufgabe der vorliegenden Erfindung ist, das unterschiedliche thermische Dehnungsverhalten der Werkstoffe von Sensorkäfig und Drucksensor zu kompensieren.

### Offenbarung der Erfindung

Die Aufgabe der Erfindung wird dadurch gelöst, indem der Wärmeausdehnungskoeffizient des Werkstoffs des Fixierelements so gewählt wird, dass ein Kompensieren von Dehnungsunterschieden zwischen den Bauteilen der Druckmesseinrichtung, insbesondere des Sensorkäfigs und des Drucksensors, erfolgt.

Durch die in den Unteransprüchen aufgeführten Maßnahmen sind vorteilhafte Weiterbildungen der im Anspruch 1 angegebenen Druckmesseinrichtung möglich.

Der Sensorkäfig kann direkt mittels einer Verbindung, insbesondere einer Schweißverbindung, an dem Verbindungsabschnitt des Gehäuses mit dem Gehäuse verbunden sein. Ferner kann der Sensorkäfig indirekt mit dem Gehäuse verbunden sein, indem der Sensorkäfig mit dem Fixierelement verbunden ist und das Fixierelement mittels einer Verbindung, insbesondere einer Schweißverbindung, an dem Verbindungsabschnitt des Gehäuses mit dem Gehäuse verbunden ist. Dabei besteht der Vorteil, dass ein modularer Aufbau der Druckmesseinrichtung möglich ist. Insbesondere kann der Sensorkäfig mit dem Fixierelement, dem Drucksensor und gegebenenfalls weiteren mit dem Sensorkäfig verbundenen Elementen vormontiert werden, so dass bei der Montage der Druckmesseinrichtung nur noch eine Verbindung des Sensorkäfigs beziehungsweise des Fixierelements mit dem Gehäuse mittels einer Schweißnaht oder dergleichen erforderlich ist.

In vorteilhafter Weise ist ein federelastisches Element vorgesehen, das innerhalb des Gehäuses angeordnet ist und das einerseits zumindest mittelbar mit dem Kraftübertragungselement und andererseits zumindest mittelbar mit dem Sensorkäfig verbunden ist. Dadurch ist keine Verbindung des federelastischen Elements mit dem Gehäuse erforderlich, so dass eine gewisse Vorspannung des federelastischen Elements vorgegeben werden kann. Insbesondere wird eine Spannungsbeaufschlagung des federelastischen Elements durch die Montagespannung, die beim Einbau der Druckmesseinrichtung in einen Zylinderkopf oder dergleichen auftritt, vermieden. Ferner werden auch während des Betriebs der Brennkraftmaschine auftretende Spannungen im Gehäuse der Druckmesseinrichtung nicht auf das federelastische Element oder andere Elemente in dem Kraftpfad zwischen dem Kraftübertragungselement und dem Drucksensor übertragen, so dass eine hohe Zuverlässigkeit der Druckmesseinrichtung gewährleistet ist.

Die definierte Vorspannung des federelastischen Elements kann beispielsweise bei der Verbindung des Fixierelements mit dem Sensorkäfig vorgegeben werden. Dies hat den Vorteil, dass bereits vor der Endmontage eine definierte Vorspannung eingestellt werden kann. Ferner kann die Vorspannung bereits bei der Verbindung des Fixierelements mit dem Sensorkäfig auf den gewünschten Wert eingestellt werden, ohne dass die beim Einbau der Druckmesseinrichtung auftretenden axialen Kräfte berücksichtigt werden müssen, da diese die Vorspannung des federelastischen Elements nicht beeinflussen. Das federelastische Element kann beispielsweise als Metallmembran ausgestaltet sein.

### Zeichnung

Bevorzugte Ausführungsbeispiele sind in der nachfolgenden Beschreibung anhand der beigefügten Zeichnungen näher erläutert. Es zeigt:
Fig. 1 ein erstes Ausführungsbeispiel einer erfindungsgemäßen Druckmesseinrichtung in einer schematischen Schnittdarstellung;
Fig. 2 den in Fig. 1 mit II bezeichneten Ausschnitt der erfindungsgemäßen Druckmesseinrichtung gemäß einem zweiten Ausführungsbeispiel der Erfindung und

### Beschreibung der Ausführungsbeispiele

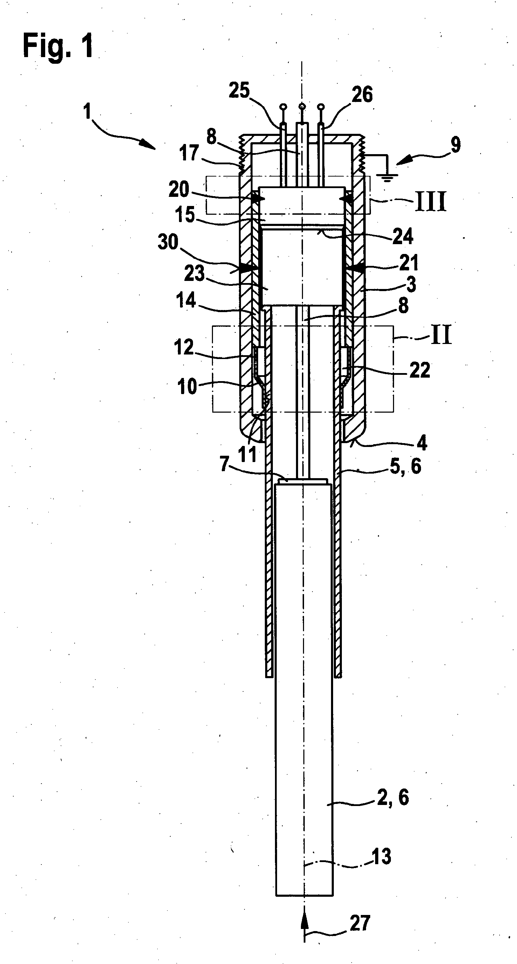

Fig. 1 zeigt ein erstes Ausführungsbeispiel einer Druckmesseinrichtung 1 in einer axialen Schnittdarstellung. Die Druckmesseinrichtung 1 ist dabei als Druckmessglühkerze 1 für eine luftverdichtende, selbstzündende Brennkraftmaschine ausgestaltet. Ein stabförmiges Heizelement 2 der Druckmessglühkerze 1 ragt bei Vor- und Wirbelkammermotoren in die Kammer der Brennkraftmaschine und bei Motoren mit Direkteinspritzung in eine Brennkammer des Motors. Die erfindungsgemäße Druckmessglühkerze 1 eignet sich jedoch auch für andere Anwendungsfälle. Ferner kann die Druckmesseinrichtung 1 auch als Druckmesszündkerze oder Druckmesseinspritzventil für gemischverdichtende, fremdgezündete Brennkraftmaschinen ausgestaltet sein.

Die Druckmessglühkerze 1 weist ein Gehäuse 3 auf, an dem ein Dichtkonus 4 ausgebildet ist. Das stabförmige Heizelement 2 ist abschnittsweise von einem Kraftübertragungselement 5 umgeben und mit diesem verbunden. Das stabförmige Heizelement 2 bildet zusammen mit dem Kraftübertragungselement 5 einen Heizkörper 6 der Druckmessglühkerze 1. Die elektrische Kontaktierung des stabförmigen Heizelements 2 des Heizkörpers 6 erfolgt an einem mit dem stabförmigen Heizelement 2 verbundenen Kontaktelement 7 mittels einer elektrischen Leitung 8, die auf geeignete Weise mit einem Steuergerät verbunden ist. Ferner ist das Kraftübertragungselement 5 des Heizkörpers 6 direkt oder indirekt mit dem Gehäuse 3 elektrisch verbunden, wobei über das Gehäuse 3 eine Verbindung mit elektrischer Masse 9 hergestellt ist.

Innerhalb des Gehäuses 3 ist ein federelastisches Element 10 vorgesehen, das in dem dargestellten Ausführungsbeispiel als Metallmembran 10 ausgestaltet ist. Die Metallmembran 10 ist dabei an einem Verbindungsabschnitt 11 mit dem Kraftübertragungselement 5 verbunden, wobei der Innendurchmesser der Metallmembran 10 am Verbindungsabschnitt 11 an den Außendurchmesser des Kraftübertragungselements 5 angepasst ist. Ferner weist die Metallmembran 10 einen Abschnitt 12 auf, an dem die Metallmembran 10 einen gegenüber dem Verbindungsabschnitt 11 vergrößerten Durchmesser aufweist. Durch diese Ausgestaltung der Metallmembran 10 ist eine Vorspannung der Metallmembran 10 in axialer Richtung, das heißt in Richtung einer Achse 13 der Druckmessglühkerze 1, möglich. Die Metallmembran 10 ist an dem Abschnitt 12 mit einem Sensorkäfig 14 verbunden, der hülsenförmig oder rohrförmig ausgestaltet sein kann. Ferner ist ein Fixierelement 15 vorgesehen, das an einem der Metallmembran 10 gegenüberliegenden Ende des Sensorkäfigs 14 mit dem Sensorkäfig 14 durch eine als Schweißverbindung 20 ausgestaltete Verbindung 20, das heißt eine Schweißnaht 20, verbunden ist. Die Schweißnaht 20 verläuft dabei vorzugsweise durchgehend in einer Umfangsrichtung zu der Achse 13. Außerdem ist der Sensorkäfig 14 mittels einer als Schweißverbindung 21 ausgestalteten Verbindung 21, das heißt einer Schweißnaht 21, mit dem Gehäuse 3 der Druckmessglühkerze 1 verbunden. Durch die Verbindung der Metallmembran 10 mit dem Kraftübertragungselement 5, der Verbindung der Metallmembran 10 mit dem Sensorkäfig 14 und der Verbindung des Sensorkäfigs 14 mittels der Schweißverbindung 21 mit dem Gehäuse 3 ist ein Innenraum 22 des Gehäuses 3 gegenüber der Kammer der Brennkraftmaschine abgedichtet. Der Innenraum 22 stellt dabei einen Teil einer konzentrischen Bohrung des Gehäuses 3 dar.

Ein Teil des Innenraums 22 ist durch ein Inneres des Sensorkäfigs 14 gebildet. Innerhalb des Sensorkäfigs 14 ist ein Drucksensor 23 angeordnet, der sich an einer Stirnfläche 24 des Fixierelements 15 abstützt. Gegenüberliegend zu der Stirnfläche 24 steht der Drucksensor 23 mit dem Kraftübertragungselement 5 in Wirkverbindung, wobei in dem dargestellten Ausführungsbeispiel das Kraftübertragungselement 5 unmittelbar an dem Drucksensor 23 anliegt. Bei einer Beaufschlagung des Drucksensors 23 mittels des Kraftübertragungselements 5 erzeugt ein beispielsweise piezoelektrischer Teil des Drucksensors 23 eine Messladung, die mittels geeigneter, aus dem Gehäuse 3 zu einer geeigneten Auswerteschaltung führenden Messleitungen 25, 26 messbar ist.

Durch einen in der Kammer der Brennkraftmaschine herrschenden Druck wird eine Beaufschlagung des stabförmigen Heizelements 2 des Heizkörpers 6 in einer axialen Richtung 27, das heißt in Richtung der Achse 13 des Gehäuses 3, erreicht. Die dabei auf das Heizelement 2 einwirkende Kraft wird zumindest im Wesentlichen auf das Kraftübertragungselement 5 des Heizkörpers 6 übertragen. Über das Kraftübertragungselement 5 wird diese Kraft auf den Drucksensor 23 übertragen, so dass in Abhängigkeit von dem Druck im Brennraum eine gewisse elektrische Ladung des Drucksensors 23 über die Messleitungen 25, 26 messbar ist.

Das Fixierelement 15 ist mittels der Schweißverbindung 20 so mit dem Sensorkäfig 14 verbunden, dass eine gewisse Vorspannung der Metallmembran 10 im drucklosen Zustand vorgegeben ist. Durch diese Vorspannung kann zum einen die Belastung der Metallmembran 10, die.durch den Brennraumdruck verursacht wird, reduziert werden, um die Lebensdauer der Metallmembran 10 zu erhöhen. Zum anderen wird durch die Vorspannung der Metallmembran 10 ein Anliegen der einzelnen Bauteile innerhalb des Kraftpfads, das heißt insbesondere der Metallmembran 10, des Sensorkäfigs 14, des Fixierelements 15, des Drucksensors 23 und des Kraftübertragungselements 5, erreicht, wodurch Hystereseeffekte bei der Druckmessung verhindert oder zumindest verringert sind.

Der Sensorkäfig 14 ist an einem einzigen Verbindungsabschnitt 30 des Gehäuses 3 mit dem Gehäuse 3 verbunden. Der Verbindungsabschnitt 30 ist dabei in Umfangsrichtung näherungsweise linienförmig ausgestaltet und seine Anordnung entspricht der Lage der Schweißnaht 21. In axialer Richtung 27, das heißt entlang der Achse 13, ist nur der Verbindungsabschnitt 30 zum Verbinden des Sensorkäfigs 14 mit dem Gehäuse 3 vorgesehen, so dass in Bezug auf die Achse 13 eine Ein-Punkt-Verbindung zwischen dem Sensorkäfig 14 und dem Gehäuse 3 definiert ist. Längenänderungen des Gehäuses 3 und des Zylinderkopfes, die in der Regel unterschiedliche Wärmeausdehnungskoeffizienten aufweisen, oder innerhalb des Gehäuses 3 entstehende Spannungen, die beispielsweise beim Betrieb der Brennkraftmaschine durch eine Erwärmung des Gehäuses 3 von dem Dichtkonus 4 her und des Zylinderkopfes entstehen können, übertragen sich somit nicht auf die Bauteile des Kraftpfades zur Messung des Druckes in der Kammer, wobei diese Bauteile, insbesondere das Kraftübertragungselement 5, die Metallmembran 10, den Sensorkäfig 14, das Fixierelement 15, den Drucksensor 23 und gegebenenfalls weitere, nicht dargestellte Elemente umfassen.

Das Gehäuse 3 weist ein Gewinde 17 auf, um eine Montage der Glühstiftkerze 1 zu ermöglichen. Eine dabei auftretende Beaufschlagung des Gehäuses 3 mit einer Montagespannung wirkt sich auf Grund der Ein-Punkt-Verbindung zwischen dem Sensorkäfig 14 und dem Gehäuse 3 ebenfalls nicht auf die Bauteile des Kraftpfades zur Messung des Druckes in der Kammer aus.

Da der Bereich der Belastung der Metallmembran 10 durch die Vorspannung der Metallmembran 10 und den Druck in der Kammer der Brennkraftmaschine im Vorhinein bestimmt ist, ist eine optimierte Ausgestaltung der Metallmembran 10 möglich, so dass eine flexible, insbesondere dünne und damit elastische, Auslegung der Metallmembran 10 möglich ist, wodurch eine genaue Messung des Druckes möglich ist. Dabei kann auch der Bereich der Belastung der Metallmembran 10 und somit der Meßbereich vergrößert werden, da die Vorspannung der Metallmembran 10 dem Druck in der Kammer entgegenwirkt. Eine bei den im Motorbetrieb bedingten hohen Verbrennungsdrucken erfolgende zyklische Verformung der Zylinderkopfwandung führt dabei zwar zu einer Verformung des Gehäuses 3 der Druckmessglühkerze 1, die sich auf Grund der Ein-Punkt-Verbindung jedoch nicht auf die Metallmembran 10 überträgt.

Insbesondere der Sensorkäfig 14 und der Drucksensor 23 können aus Werkstoffen mit unterschiedlichem Dehnungsverhalten gefertigt sein. Die dadurch bedingten Dehnungsunterschiede sind vorzugsweise durch eine geeignete Wahl des Werkstoffes oder der Werkstoffe des Fixierelements 15 thermisch kompensiert. Ein Abgleich ist dabei durch die Wahl der axialen Länge, das heißt der axialen Erstreckung entlang der Achse 13, des Fixierelements 15 möglich. Üblicherweise hat der Drucksensor 23 eine relativ geringe Wärmeausdehnung, so dass der Werkstoff des Fixierelements 15 vorzugsweise aus einem Werkstoff mit einem Wärmeausdehnungskoeffizienten gefertigt ist, der größer ist als ein Wärmeausdehnungskoeffizient des Sensorkäfigs 14.

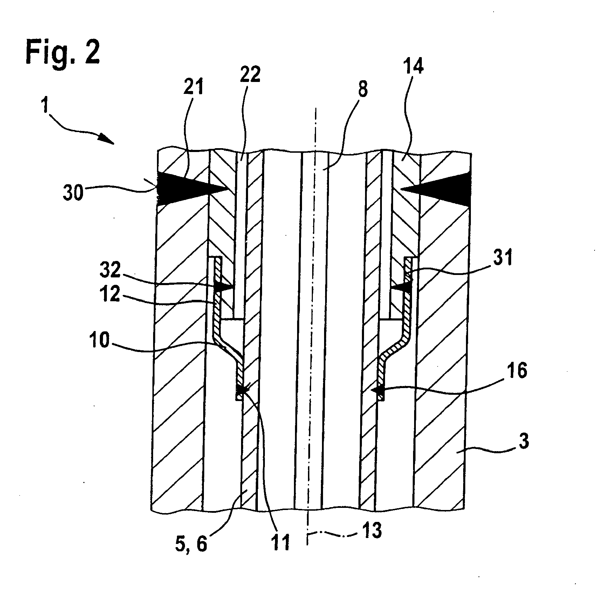

Fig. 2 zeigt den in Fig. 1 mit II bezeichneten Ausschnitt einer Druckmessglühkerze 1 gemäß einem zweiten Ausführungsbeispiel der Erfindung. Sich entsprechende Elemente sind dabei in dieser und in allen anderen Figuren mit übereinstimmenden Bezugszeichen versehen, wodurch sich eine wiederholende Beschreibung erübrigt.

Bei diesem Ausführungsbeispiel ist der Sensorkäfig 14 entsprechend dem in Fig. 1 gezeigten Ausführungsbeispiel an dem Verbindungsabschnitt 30 direkt mit dem Gehäuse 3 durch eine umlaufende Schweißnaht 21 verbunden. Ferner weist der Sensorkäfig 14 auf der Seite der Metallmembran 10 eine ringförmige Aussparung 31 auf, wodurch ein Aufstecken der Metallmembran 10 mit ihrem Abschnitt 12 auf den Sensorkäfig 14 ermöglicht ist. Dadurch ist eine zuverlässige Verbindung zwischen dem Sensorkäfig 14 und der Metallmembran 10 ausgebildet. Diese Verbindung ist durch eine umlaufende Schweißnaht 32, die den Abschnitt 12 der Metallmembran 10 mit dem Sensorkäfig 14 verbindet, weiter verbessert. Ferner ist die Metallmembran 10 an ihrem Verbindungsabschnitt 11 mittels einer Schweißnaht 16 mit dem Kraftübertragungselement 5 verbunden.

Der Sensorkäfig 14 ist durch eine als Schweißverbindung 37 ausgestaltete Verbindung 37, das heißt eine umlaufende Schweißnaht 37, mit dem Fixierelement 15 verbunden, so dass über das Fixierelement 15 eine mittelbare Verbindung des Sensorkäfigs 14 mit dem Gehäuse 3 ausgebildet ist.

## Patentansprüche

1. Druckmesseinrichtung (1) zur Anordnung in einer Kammer einer Brennkraftmaschine, insbesondere Druckmessglühkerze für eine luftverdichtende, selbstzündende Brennkraftmaschine, mit einem Gehäuse (3), einem Kraftübertragungselement (5), das teilweise aus dem Gehäuse (3) ragt, und einem Drucksensor (23), der in einem Innenraum (22) des Gehäuses (3) angeordnet istund einem Fixierelement (15), wobei der Drucksensor (23) einerseits zumindest mittelbar mit dem Kraftübertragungselement (5) in Wirkverbindung steht, um eine auf Grund eines in der Kammer herrschenden Druckes bedingte Beaufschlagung des Kraftübertragungselementes (5) zum Bestimmen des in der Kammer herrschenden Druckes zu erfassen, wobei sich der Drucksensor (23) andererseits zumindest mittelbar an einem Fixierelement (15) abstützt, wobei ein Sensorkäfig (14) vorgesehen ist, der zumindest mittelbar mit dem Fixierelement (15) und zumindest mittelbar an einem Verbindungsabschnitt (30; 35) des Gehäuses (3) mit dem Gehäuse (3) verbunden ist, und wobei ein federelastisches Element (10) vorgesehen ist, welches innerhalb des Gehäuses (3) angeordnet ist und welches einerseits zumindest mittelbar mit dem Kraftübertragungselement (5) und andererseits zumindest mittelbar mit dem Sensorkäfig (14) verbunden ist, **dadurch gekennzeichnet, dass** das Fixierelement (15) zum Kompensieren von Dehnungsunterschieden von Bauteilen der Druckmesseinrichtung (1) eine an zumindest eine Wärmeausdehnung des Sensorkäfigs (14) angepasste Wärmeausdehnung aufweist, derart, dass das Fixierelement (15) zumindest im Wesentlichen aus einem Werkstoff mit einem Wärmeausdehnungskoeffizienten gebildet ist, der größer ist als ein Wärmeausdehnungskoeffizient eines Werkstoffs, aus dem der Sensorkäfig (14) zumindest im Wesentlichen gebildet ist.

2. Druckmesseinrichtung nach Anspruch 1, **dadurch gekennzeichnet, dass** der Sensorkäfig (14) mittels einer Verbindung (21), insbesondere einer Schweißverbindung (21), an dem Verbindungsabschnitt (30) des Gehäuses (3) mit dem Gehäuse (3) verbunden ist.

3. Druckmesseinrichtung nach Anspruch 1, **dadurch gekennzeichnet, dass** der Sensorkäfig (14) mit dem Fixierelement (15) verbunden ist und dass das Fixierelement (15) mittels einer Verbindung (36), insbesondere einer Schweißverbindung (36), an dem Verbindungsabschnitt (35) des Gehäuses (3) mit dem Gehäuse (3) verbunden ist.

4. Druckmesseinrichtung nach Anspruch 1, **dadurch gekennzeichnet, dass** das Fixierelement (15) und der Sensorkäfig (14) so miteinander verbunden sind, dass das federelastische Element (10) mit einer gewissen Vorspannkraft beaufschlagt ist.

5. Druckmesseinrichtung nach Anspruch 4, **dadurch gekennzeichnet, dass** das federelastische Element (10) als Metallmembran (10) ausgestaltet ist.

6. Druckmesseinrichtung nach Anspruch 1, **dadurch gekennzeichnet, dass** das Kraftübertragungselement (5) als stabförmiges Kraftübertragungselement (5) ausgestaltet ist.

7. Druckmesseinrichtung nach Anspruch 1, **dadurch gekennzeichnet, dass** der Sensorkäfig (14) als hülsenförmiger Sensorkäfig (14) ausgestaltet ist.

## Claims

1. Pressure measuring device (1) for arrangement in a chamber of an internal combustion engine, in particular pressure measuring glowplug for an air-compressing, auto-ignition internal combustion engine, having a housing (3), a force-transmitting element (5) which partially projects out of the housing (3), and a pressure sensor (23) which is arranged in an interior space (22) of the housing (3), and a securing element (15), wherein, on the one hand, the pressure sensor (23) is operatively connected at least indirectly to the force transmitting element (5) in order to detect the force transmitting element (5) being acted on as a result of pressure prevailing in the chamber, in order to determine the pressure prevailing in the chamber wherein, on the other hand, the pressure sensor (23) is supported at least indirectly on a securing element (15), wherein a sensor cage (14) is provided which is connected at least indirectly to the securing element (15) and at least indirectly to the housing (3) at a connecting section (30; 35) of the housing (3), and wherein a spring-elastic element (10) is provided which is arranged inside the housing (3) and which is connected, on the one hand, at least indirectly to the force transmitting element (5) and, on the other hand, at least indirectly to the sensor cage (14), **characterized in that** the securing element (15) has, for the purpose of compensating differences in expansion of components of the pressure measuring device (1), thermal expansion which is adapted to at least a thermal expansion of the sensor cage (14), such that the securing element (15) is formed at least essentially from a material having a co-efficient of thermal expansion which is greater than a co-efficient of thermal expansion of a material from which the sensor cage (14) is at least essentially formed.

2. Pressure measuring device according to Claim 1, **characterized in that** the sensor cage (14) is connected to the housing (3) at the connecting section (30) of the housing (3) by means of a connection (21), in particular a welded connection (21).

3. Pressure measuring device according to Claim 1, **characterized in that** the sensor cage (14) is connected to the securing element (15), and **in that** the securing element (15) is connected to the housing (3) at the connecting section (35) of the housing (3) by means of a connection (36), in particular a welded connection (36).

4. Pressure measuring device according to Claim 1, **characterized in that** the securing element (15) and the sensor cage (14) are connected to one another in such a way that a certain pretensioning force is applied to the spring-elastic element (10).

5. Pressure measuring device according to Claim 4, **characterized in that** the spring-elastic element (10) is configured as a metal diaphragm (10).

6. Pressure measuring device according to Claim 1, **characterized in that** the force transmitting element (5) is configured as a rod-shaped force transmitting element (5).

7. Pressure measuring device according to Claim 1, **characterized in that** the sensor cage (14) is configured as a sleeve-shaped sensor cage (14).

## Revendications

1. Dispositif de mesure de pression (1) destiné à être disposé dans une chambre d'un moteur à combustion interne, en particulier bougie à incandescence de mesure de pression pour un moteur à combustion interne à compression d'air et auto-allumage, comprenant un boîtier (3), un élément de transfert de force (5) qui sort partiellement hors du boîtier (3), et un capteur de pression (23) qui est disposé dans un espace interne (22) du boîtier (3), ainsi qu'un élément de fixation (15), le capteur de pression (23) étant d'une part en liaison fonctionnelle au moins de manière indirecte avec l'élément de transfert de force (5), afin de détecter une sollicitation de l'élément de transfert de force (5) due à la pression régnant dans la chambre, pour déterminer la pression régnant dans la chambre, le capteur de pression (23) s'appuyant d'autre part au moins de manière indirecte contre un élément de fixation (15), une cage de capteur (14) étant prévue, laquelle est connectée au moins de manière indirecte à l'élément de fixation (15), et au moins de manière indirecte, au niveau d'une portion de connexion (30 ; 35) du boîtier (3), au boîtier (3), et un élément élastique à ressort (10) étant prévu, lequel est disposé à l'intérieur du boîtier (3) et est connecté d'une part au moins de manière indirecte à l'élément de transfert de force (5) et d'autre part de manière au moins indirecte à la cage de capteur (14), **caractérisé en ce que** l'élément de fixation (15) présente, pour compenser les différences de dilatation de composants du dispositif de mesure de pression (1), une dilatation thermique adaptée à au moins une dilatation thermique de la cage de capteur (14), de telle sorte que l'élément de fixation (15) soit formé au moins essentiellement d'un matériau ayant un coefficient de dilatation thermique supérieur à un coefficient de dilatation thermique d'un matériau formant au moins essentiellement la cage de capteur (14).

2. Dispositif de mesure de pression selon la revendication 1, **caractérisé en ce que** la cage de capteur (14) est connectée au boîtier (3) au moyen d'une connexion (21), en particulier d'une connexion soudée (21), au niveau de la portion de connexion (30) du boîtier (3).

3. Dispositif de mesure de pression selon la revendication 1, **caractérisé en ce que** la cage de capteur (14) est connectée à l'élément de fixation (15) et **en ce que** l'élément de fixation (15) est connecté au boîtier (3) au moyen d'une connexion (36), en particulier d'une connexion soudée (36), au niveau de la portion de connexion (35) du boîtier (3).

4. Dispositif de mesure de pression selon la revendication 1, **caractérisé en ce que** l'élément de fixation (15) et la cage de capteur (14) sont connectés l'un à l'autre de telle sorte que l'élément élastique à ressort (10) soit sollicité avec une certaine force de précontrainte.

5. Dispositif de mesure de pression selon la revendication 4, **caractérisé en ce que** l'élément élastique à ressort (10) est configuré sous forme de membrane métallique (10).

6. Dispositif de mesure de pression selon la revendication 1, **caractérisé en ce que** l'élément de transfert de force (5) est configuré sous forme d'élément de transfert de force en forme de barre (5).

7. Dispositif de mesure de pression selon la revendication 1, **caractérisé en ce que** la cage de capteur (14) est configurée sous forme de cage de capteur en forme de douille (14).
